# EUROPÄISCHE PATENTSCHRIFT

(11) **EP 2 692 583 B1**
(45) Veröffentlichungstag und Bekanntmachung des Hinweises auf die Patenterteilung: **24.07.2019**
(21) Anmeldenummer: 13171375.2
(22) Anmeldetag: 11.06.2013
(51) Int. Cl.: B60Q 1/076

(54) **Verstelleinrichtung für einen Kraftfahrzeugscheinwerfer**
Adjustment device for a motor vehicle headlamp
Dispositif de réglage pour un phare de véhicule automobile

(30) Priorität: 30.07.2012 AT 503032012
(43) Veröffentlichungstag der Anmeldung: 05.02.2014
(73) Patentinhaber: ZKW Group GmbH, 3250 Wieselburg (AT)
(72) Erfinder: Baminger, Peter, 3241 Kirnberg (AT)
(74) Vertreter: Patentanwaltskanzlei Matschnig & Forsthuber OG

(56) Entgegenhaltungen:
- EP-A1- 2 100 767
- EP-A1- 2 181 889
- FR-A1- 2 544 463
- FR-A1- 2 746 730
- GB-A- 2 285 519
- US-A1- 2007 127 254
- US-A1- 2011 122 640

## Beschreibung

Die Erfindung betrifft eine Verstelleinrichtung für einen Kraftfahrzeugscheinwerfer, welcher zumindest ein mit Hilfe eines Aktors bewegbares, optisch relevantes Bauteil besitzt.

Grundsätzlich ist unter "optisch relevantes Bauteil" jedes Bauteil zu verstehen, das einen Einfluss auf die vor ein Kraftfahrzeug abgebildete Lichtverteilung ausübt insofern, als ein Verstellen/Verschwenken/Bewegen dieses Bauteiles die Lichtverteilung verändert. Beispiele für solche optisch relevanten Bauteile sind Blenden(anordnungen), Lichtquellen, Reflektoren oder ganze Lichtmodule. Die hier vorgestellte Verstellvorrichtung ist prinzipiell zur Verstellung für alle diese Bauteile geeignet, wobei in erster Linie aber ein Einsatz zum Verstellen von Reflektoren und insbesondere einem oder mehreren Lichtmodulen, welche(s) vorzugsweise in einem Tragrahmen angeordnet ist/ sind, angedacht ist. Das optisch relevante Bauteil kann dabei verstellbar sein, indem dieses beispielsweise um eine Achse verschwenkt oder entlang einer vorgebbaren Bahn bewegt wird.

Es sind Verstelleinrichtungen für KFZ-Scheinwerfer bekannt geworden, die zur Leuchtweitenregulierung, zur Ausrichtung eines Kurvenlichtes, zur Verstellung von Blenden, zur Ausrichtung von Abschattungselementen bzw. zur Verstellung des Abblendlichtes und/oder des Fernlichtes verwendet werden. Im Falle der Leuchtweitenregulierung ist beispielsweise eine elektromotorisch wirkende Stelleinrichtung dazu eingerichtet, über ein Stellelement den Tragrahmen eins Kraftfahrzeugscheinwerfers zu verschwenken. Eine Bewegung des Stellelements führt darin zu einer Schwenk- und/oder Drehbewegung des Tragrahmens, womit eine Höhenverstellung und/oder einer Seitenverstellung der Lichtverteilung des Kraftfahrzeugscheinwerfers möglich ist.

Der technische Aufbau der Verstelleinrichtung sowie des betroffenen Bauteils (z.B. Tragrahmen, Lichtquelle, Reflektor oder ähnliches) legt fest, in welchem Ausmaß eine Bewegung des Stellelements zu einer Bewegung des Scheinwerfers bzw. des optisch relevanten Bauteils führt. So ist beispielsweise die Beabstandung eines mit dem Scheinwerfer in Eingriff stehenden Stellelements zu einer im Scheinwerfer vorgesehenen Drehachse ausschlaggebend für die erzielbare Hebelwirkung, mit Hilfe derer eine Linearbewegung des Stellelements in eine Drehbewegung des Scheinwerfers bzw. des optisch relevanten Bauteils umgelenkt werden kann. Die Beabstandung zwischen Stellelement und der Drehachse des Scheinwerfers wird daher so gewählt, dass bei gegebener Auflösung des Elektromotors die gewünschte Stellgenauigkeit bei der Ausrichtung des Scheinwerfers bzw. des optisch relevanten Bauteils erzielt wird. Die Positionierung der elektromotorisch wirkenden Stelleinrichtung in Bezug auf die Drehachse unterliegt daher zumindest der Einschränkung jene Beabstandung zur Drehachse einzuhalten, die für die Stellgenauigkeit der Ausrichtung des Scheinwerfers bzw. des optisch relevanten Bauteils notwendig ist. Somit ist eine der Drehachse des Scheinwerfers nahe und Platz sparende Anordnung der elektromotorisch wirkenden Stelleinrichtung, des Elektromotors bzw. der gesamten Verstelleinrichtung nicht möglich. Unter Auflösung wird dabei die Skalierung bzw. die Abstufung einzelner diskreter Schritte verstanden, mit denen ein mit dem Stellelement in Eingriff stehendes Aktorelement positioniert werden kann. Das Aktorelement ist beispielsweise ein Antriebselement. Sofern die Verstelleinrichtung einer anderen obig genannten Aufgabe dient, beispielsweise der Ausrichtung eines Kurvenlichtes, so ergibt sich dieselbe Problematik der limitierten Auflösung der Stellbewegung bzw. daraus resultierender Einschränkungen.

FR 2 746 730 A offenbart eine Verstelleinrichtung für einen Kraftfahrzeugscheinwerfer, welcher zumindest ein mit Hilfe eines Aktors bewegbares, optisch relevantes Bauteil besitzt, wobei ein Antriebselement des Aktors ein in einem Lagerstück drehbar gelagertes Abrollelement bewegt, wobei die Bewegung des Abrollelements in Bewegungsrichtung des Antriebselements eine Bewegung eines Stellelements bewirkt, wobei das Antriebselement des Aktors auf das Stellelement wirkt, wobei das Stellelement an dem optisch relevanten Bauteil angreift, und das Antriebselement durch den Aktor linear bewegbar ist sowie das Abrollelement zumindest eine Umfangsfläche aufweist, wobei der Aktor ein Elektromotor ist, wobei das Abrollelement in einem mit dem Stellelement verbundenen Lagerstück drehbar gelagert ist, und das Abrollelement einerseits an einer ersten, dem Antriebselement zugeordneten ersten Abrollfläche und andererseits an einer zweiten Abrollfläche in Eingriff steht und das Abrollelement an seiner Umfangsfläche zwischen der ersten Abrollfläche und der zweiten Abrollfläche abrollen kann.

Eine Aufgabe der Erfindung ist es, eine Verstelleinrichtung zu schaffen, die im Gegensatz zu dem Stand der Technik ohne Einschränkung der Stellgenauigkeit des Scheinwerfers bzw. des optisch relevanten Bauteils eine kompakte und Platz sparende Anordnung der Verstelleinrichtung, insbesondere des Aktors sowie des Stellelements, zulässt und/oder eine Auflösungsverbesserung der Stellbewegung des Stellelements ermöglicht.

Diese Aufgabe wird mit einer Verstelleinrichtung gemäß Anspruch 1 gelöst.

Um eine effiziente und kostengünstige Anbindung des Abrollelements an das Stellelement zu realisieren, ist die zumindest eine Umfangsfläche mit einem Wellenstück verbunden.

In einer vorteilhaften Weiterentwicklung der Erfindung weist das Abrollelement zwei Umfangsflächen auf, die in Abstand voneinander liegend über ein Wellenstück miteinander verbunden sind. Die Lagerung des Abrollelements erfolgt dabei über das Wellenstück. Durch das Vorsehen zweier voneinander beabstandeter Umfangsflächen lassen sich Abrollbewegungen besonders wiederholgenau durchführen. Zusätzlich wird die mechanische Beanspruchbarkeit des Abrollelements erhöht.

Die Lagerung des Abrollelements ist in besonders einfacher Art und Weise realisiert, wenn das Abrollelement mit Hilfe des Wellenstücks gelagert ist.

Um die Wiederholgenauigkeit der Abrollbewegung sowie die mechanische Beanspruchbarkeit des Abrollelements zusätzlich zu erhöhen, kann es vorgesehen sein, dass die zumindest eine Umfangsfläche eine Verzahnung aufweist.

In einer vorteilhaften Ausführung der Erfindung ist die erste Abrollfläche durch die Flächengestaltung einer Zahnstange gebildet, womit eine einfache und für Abrollbewegungen gut geeignete Abrollfläche realisiert ist. In gleicher Weise kann es vorgesehen sein, dass die zweite Abrollfläche durch die Flächengestaltung einer Zahnstange gebildet ist. Besonders Vorteilhaft ist es, wenn die erste und die zweite Abrollfläche jeweils durch die Flächengestaltung einer Zahnstange gebildet sind.

In einer vorteilhaften Weiterentwicklung der Erfindung sind das Lagerstück und das Stellelement miteinander einstückig ausgeführt, womit eine geradlinige Relativbewegung des Lagerstückes mit jener des Stellelements genau übereinstimmt, und somit eine besonders kostengünstige und stabile Ausführung der Erfindung gegeben ist.

Um die Bewegungsrichtung des Stellelements dauerhaft und effizient festzulegen, ist in einer zweckmäßigen Variante vorgesehen, das das Antriebselement ein Gegenstück aufweist, wobei die erste Abrollfläche an dem Gegenstück angeordnet ist, und das Gegenstück in zumindest einer parallel zu der Bewegungsrichtung des Antriebselements verlaufenden ersten Führung geführt ist. Dabei kann alternativ oder zusätzlich vorgesehen sein, dass das Stellelement in zumindest einer parallel zu der Bewegungsrichtung des Antriebselements verlaufenden zweiten Führung geführt ist, womit die Übertragung der Bewegung des Antriebselements auf das Stellelement besonders genau realisiert werden kann.

In einer vorteilhaften Ausführungsform der Erfindung ist die lineare Bewegung des Antriebselements besonders einfach realisiert, indem der Elektromotor ein elektrischer Linearmotor ist.

Die Erfindung bezieht sich weiters auf einen Kraftfahrzeugscheinwerfer, der in vorteilhafter Weise mit zumindest einer erfindungsgemäßen Verstelleinrichtung ausgerüstet ist. So verfügt der Kraftfahrzeugscheinwerfer zumindest über ein mit Hilfe eines Aktors bewegbares, optisch relevantes Bauteil, wobei ein Antriebselement des Aktors ein in einem Lagerstück drehbar gelagertes Abrollelement bewegt, wobei die Bewegung des Abrollelements in Bewegungsrichtung des Antriebselements eine untersetzte Bewegung eines Stellelements bewirkt.

Die Erfindung samt weiteren Vorteilen ist im Folgenden an Hand einer beispielhaften nicht einschränkenden Ausführungsform näher erläutert, die in den Figuren veranschaulicht ist. Hierbei zeigt
Fig. 1 eine schaubildliche Darstellung eines Kraftfahrzeugscheinwerfers gemäß einer Ausführungsform einer erfindungsgemäßen Verstelleinrichtung,
Fig. 2 eine Explosionsansicht von schräg unten der Verstelleinrichtung von Fig. 1,
Fig. 3 eine weitere Explosionsansicht von schräg oben der Verstelleinrichtung der Fig. 1,
Fig. 4 eine Schrägansicht der Verstelleinrichtung entsprechend Fig. 3, jedoch im zusammengebauten Zustand und
Fig. 5 eine Seitenansicht der Verstelleinrichtung der Fig. 1 bis 4.

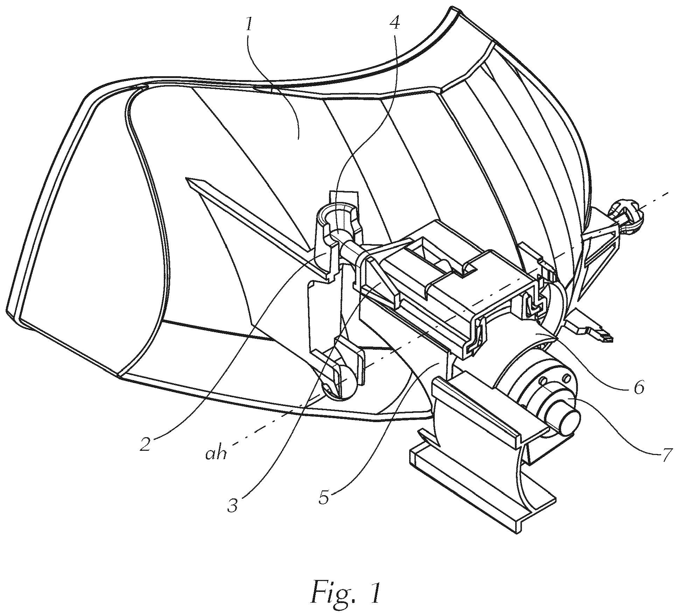

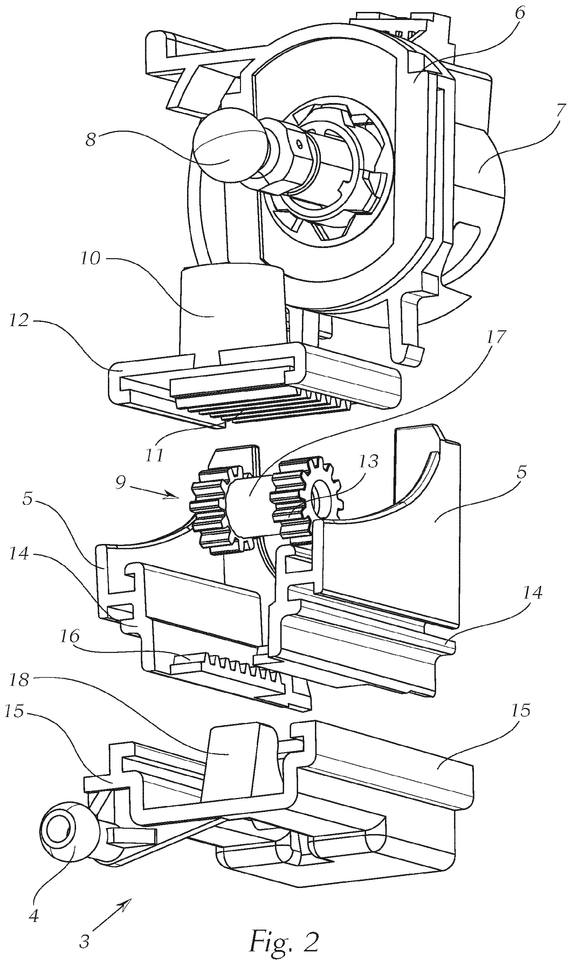

In Fig. 1 ist ein Scheinwerferreflektor 1 dargestellt, der hier das optisch relevante Bauteil 1 im Sinne der Erfindung ist, sowie eine nicht einschränkende Ausführungsform (siehe ebenso Fig. 2 bis 5) der erfindungsgemäßen Verstelleinrichtung erkennbar. Die Blickrichtung ist dabei von unten. Es sei erwähnt, dass sich sämtliche Angaben dabei, sofern nicht anders erwähnt, auf den in einem Kraftfahrzeug eingebauten Zustand des Kraftfahrzeugscheinwerfers beziehen. Der Scheinwerferreflektor 1 weist in Fig. 1 eine an dem Scheinwerferreflektor 1 angeordnete Stellkopfaufnahme 2 auf, mittels derer der Scheinwerferreflektor 1 mit einem Stellkopf 4 eines Stellelements 3 in Eingriff steht. Der Scheinwerferreflektor 1 ist dabei um die horizontale Achse ah schwenkbar. Der Stellkopf 4 ragt in die Stellkopfaufnahme 2, durch die der Stellkopf 4 zumindest teilweise umfasst wird, womit eine Linearbewegung des Stellkopfes 4 in eine Schwenk- oder Drehbewegung des Scheinwerferreflektors 1 umgesetzt wird. Eine andere Anordnung bzw. Ausrichtung der Achse, beispielsweise eine vertikale oder schräge Ausrichtung, ist ebenso denkbar, und kann von dem Fachmann mit bekannten Mitteln realisiert werden. Alternativ kann die Linearbewegung des Stellkopfes 4 in eine beliebige andere Bewegung umgewandelt werden. Ebenso ist es denkbar, dass die Linearbewegung des Stellkopfes 4 ein daran angreifendes Element, beispielsweise eine Blende, linear bewegt. Generell ist die gezeigte Ausführungsform mit horizontaler Achse nicht als einschränkend für die Erfindung zu betrachten ist.

Das Stellelement 3 ist auf einem Stabilisierungselement 5 gleitend befestigt. Ein in einem Gehäuse 6 befindlicher Elektromotor 7, der in der gezeigten Ausführungsform den Aktor darstellt, weist ein Antriebselement 8 (siehe Fig. 2 bis 5) auf. Das Antriebselement 8 stellt das Aktorelement des Elektromotors 7 dar und ist dazu eingerichtet, das Abrollelement 9 (siehe Fig. 2 bis 5) zu bewegen. Dabei wird die Bewegung des Abrollelements 9 zumindest teilweise auf das Stellelement 3 und somit den Stellkopf 4 übertragen. Alternativ können beliebige andere Arten von Aktoren verwendet, die dazu geeignet sind, entsprechende Bewegungen eines Aktorelements auf ein Abrollelement zu übertragen.

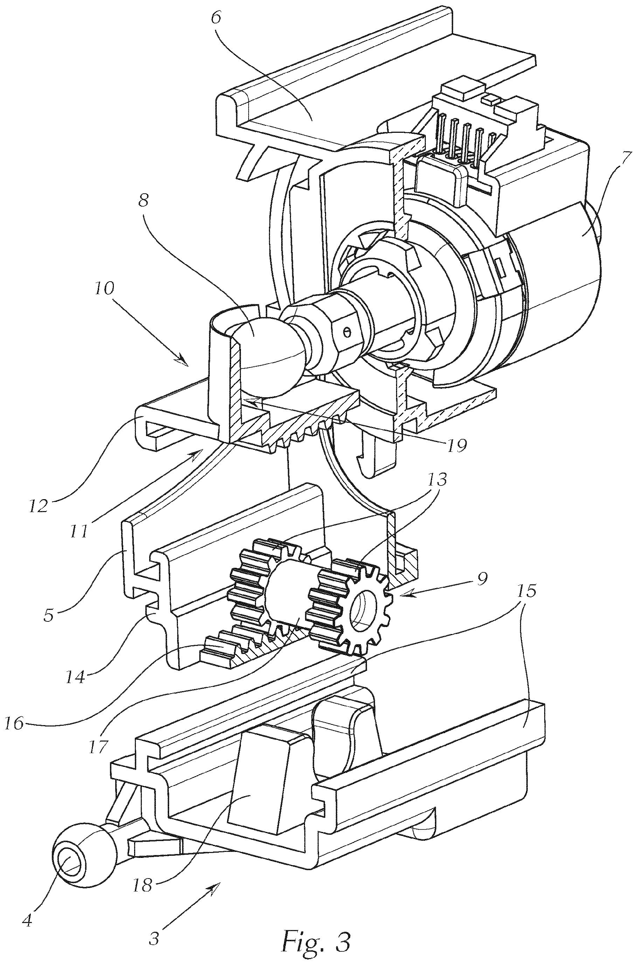

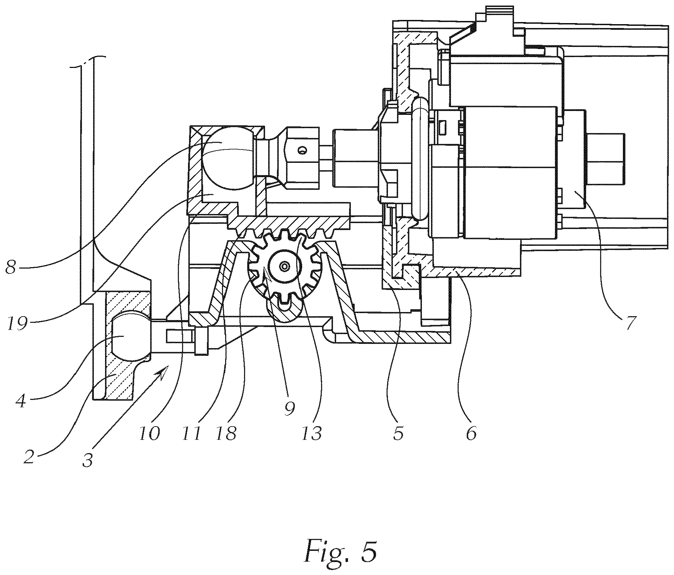

Wie aus Fig. 2 bis Fig. 5 hervorgeht, greift das Antriebselement 8 über einen Kugelkopf in eine entsprechend gestaltete Aufnahme 19 (siehe Fig. 3 und Fig. 5) eines Gegenstücks 10, welches eine erste Abrollfläche 11 aufweist. Die erste Abrollfläche 11 befindet sich an der dem Abrollelement 9 zugewandten Seite des Gegenstücks 10 und kontaktiert das Abrollelement 9 im zusammengebauten Zustand der Verstelleinrichtung. Die erste Abrollfläche 11 ist dazu eingerichtet, eine Linearbewegung des Antriebselements 8 auf das Abrollelement 9 zu übertragen. Das Gegenstück 10 ist dabei fest mit dem Antriebselement 8 verbunden, indem die im Gegenstück 10 vorgesehene Aufnahme 19 beispielsweise den Kugelkopf des Antriebselements zumindest teilweise umschließt. Das Gegenstück 10 kann dabei mit einer mit dem Stabilisierungselement 5 in Eingriff stehenden ersten Führung 12 versehen sein, die sicherstellt, dass das Gegenstück 10 parallel zur Bewegungsrichtung des Antriebselements 8 bewegbar ist. Das Abrollelement 9 weist eine zur ersten Abrollfläche 11 des Gegenstücks 10 korrespondierende Umfangsfläche 13 auf, die dazu eingerichtet ist die erste Abrollfläche 11 zu kontaktieren. So weist das Abrollelement 9 in der gezeigten Ausführungsform an der Umfangsfläche 13 eine Verzahnung auf, die ein besonders wiederholgenaues Abrollen des Abrollelements 9 an der in dieser Ausführungsform korrespondierend verzahnten ersten Abrollfläche 11 erlaubt. Die Verzahnung der ersten Abrollfläche 11 kann dabei beispielsweise durch eine an dem Gegenstück 10 angeordnete Zahnstange realisiert werden, womit die erste Abrollfläche 11 die Flächengestalt einer Zahnstange aufweist. Alternativ können die korrespondierenden Flächen (erste Abrollfläche 11 und Umfangsfläche 13) aber auch anders ausgeführt sein. Es können vom Fachmann auf dem Gebiet vielfältige Varianten gefunden werden, die ein Abrollen des Abrollelements 9 an der ersten Abrollfläche 11 erlauben. So können die korrespondierenden Flächen beispielsweise unverzahnt und mit entsprechendem Reibungskontakt ausgeführt sein.

Zur zusätzlichen Stabilisierung der Abrollbewegung des Abrollelements 9 ist in der gezeigten Ausführungsform der Erfindung das Stabilisierungselement 5 vorgesehen, welches mit dem Elektromotor 7 bzw. mit dessen Gehäuse 6 fest verbunden ist, und Führungsschienen 14 für das Gegenstück 10 sowie für das Stellelement 3 aufweist, das in der dargestellten Ausführungsform über eine zweite Führung 15 verfügt. Die zweite Führung 15 ist parallel zur Bewegungsrichtung des Antriebselements 8 aufgeführt. Die Stabilisierung der Abrollbewegung des Abrollelements 9 erfolgt dabei durch die erste Abrollfläche 11 des Gegenstückes 10 und der gegenüberliegenden und parallel dazu ausgerichteten zweiten Abrollfläche 16 des Stabilisierungselements 5, die ebenso eine Verzahnung aufweist. Die Ausgestaltung der zweiten Abrollfläche 16 kann ebenfalls, wie bei der Ausgestaltung der ersten Abrollfläche 11 beschrieben, frei gewählt werden.

Das Stabilisierungselement 5 erhöht die Haltbarkeit und Wiederholgenauigkeit der erfindungsgemäßen Verstelleinrichtung zusätzlich, ist aber für dessen Funktion nicht zwingend erforderlich.

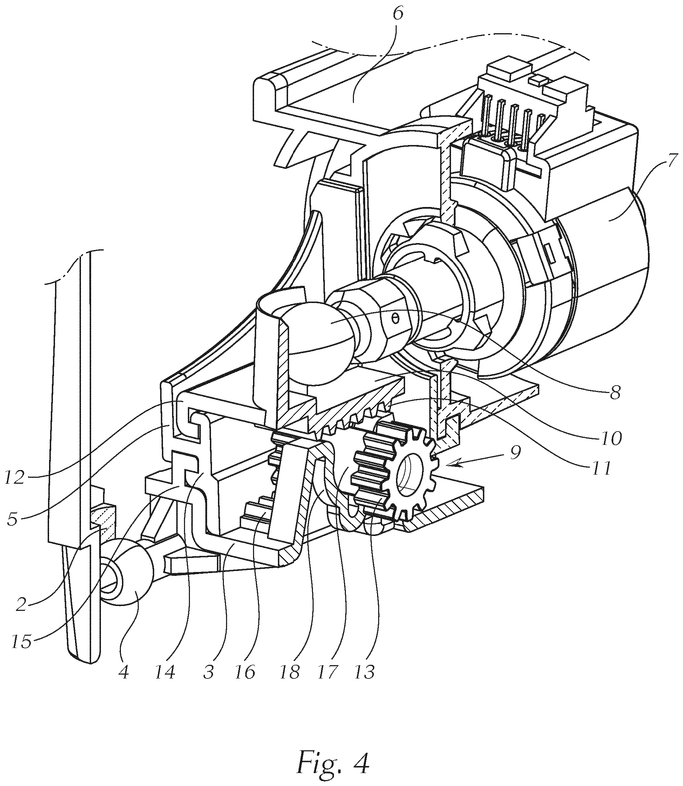

Das Abrollelement 9 ist in der dargestellten Ausführungsform als Zahnrad ausgeführt, welches zwei verzahnte Umfangsflächen 13 auf, die durch einen zylindrischen, glatten Wellenstück 17 zueinander beabstandet sind. Wie in Fig. 4 erkennbar, steht ein im Stellelement 3 angebrachtes Lagerstück 18 mit dem Wellenstück 17 in einer Art und Weise in Eingriff, die eine Drehung des im Lagerstück 18 aufgenommenen Abrollelements 9 zulässt und eine Relativbewegung der Drehachse des Abrollelements 9 gegenüber dem Lagerstück 18 verhindert. Das Lagerstück 18 ist hierbei mit dem Stellelement 3 starr verbunden. Das Abrollelement 9, das Lagerstück 18 sowie die korrespondieren Abrollflächen 11, 13 und 16 bilden in der gezeigten Ausführungsform ein Getriebe. In einer Variante kann das Lagerstück 18 vom Stellelement 3 getrennt ausgeführt sein und beispielsweise über eine Führung eine Bewegung des Lagerstücks 18 auf das Stellelement 3 übertragen, womit eine Variante der erfindungsgemäßen Verstelleinrichtung realisierbar ist, in der die Bewegungsrichtung des Antriebselements 8 von jener des Stellelements 3 abweicht.

Der Elektromotor 7 ist in der dargestellten Ausführungsvariante als Linearmotor ausgeführt, womit eine Linearbewegung des Antriebselements 8 besonders einfach realisiert werden kann. In Abwandlung dazu können auch andere dem Fachmann auf dem Gebiet geläufige Anordnungen gewählt werden, die geeignet sind, eine Linearbewegung des Antriebselements 8 und/oder des Stellelements 3 zu realisieren. So könnte der Elektromotor 7 ebenso einen Rotor aufweisen, wobei an einer mit dem Rotor verbundenen Welle ein Zahnrad angeordnet sein kann, das beispielsweise mit einer ebenen Verzahnung eines geradlinig geführten alternativen Antriebselements in Eingriff steht, womit dieses durch Drehung dieses Zahnrades verschiebbar ist.

Fig. 5 zeigt die in Fig. 1 bis 4 dargestellte Ausführungsvariante der erfindungsgemäßen Verstelleinrichtung in einer Seitenansicht, wobei das Stellelement 3, das Lagerstück 18, das Abrollelement 9, das Stabilisierungselement 5, das Gegenstück 11 sowie der Scheinwerferreflektor 1 geschnitten dargestellt sind.

Die Funktion der erfindungsgemäßen Verstelleinrichtung wird nun beispielhaft beschrieben.

Eine durch den Elektromotor 7 veranlasste Linearbewegung des Antriebselements 8 überträgt sich auf die erste Abrollfläche 11 (im Verhältnis 1:1) des Gegenstückes 10, wodurch das die erste Abrollfläche 11 an deren Umfangfläche 13 kontaktierende und in dem Lagerstück 18 aufgenommene Abrollelement 9 die Linearbewegung zumindest teilweise in eine Drehbewegung umsetzt. Genauer gesagt erfolgt die lineare Bewegung der Drehachse des Abrollelements 9 bei einer solchen Anordnung, in welcher das Abrollelement 9 an deren Umfangsfläche 13 zwischen der ersten Abrollfläche 11 und der mit dem Elektromotor ortsfest verbundenen zweiten Abrollfläche 16 abrollt, mit der halben Umfangsgeschwindigkeit. Unter dem Ausdruck "Umfangsgeschwindigkeit" wird dabei jene Geschwindigkeit verstanden, mit der die Linearbewegung der ersten Abrollfläche 11 an die Umfangsfläche 13 des Abrollelements 9 tangential angreift. Auf diese Art und Weise wird eine Untersetzung der Linearbewegung des Antriebselements 8 auf die Linearbewegung des Lagerstücks 18 im Verhältnis von 2:1 realisiert. Hierdurch kann bei gegebener Auflösung bzw. Stellgenauigkeit des durch den Elektromotor 7 positionierten Antriebselements 8 eine Verdopplung der Auflösung bzw. Stellgenauigkeit des Stellelements 3 erreicht werden, wenn die Lage des Lagerstückes 18 und jene des Stellelements 3 beispielsweise starr miteinander gekoppelt ist, was durch eine miteinander einstückige Ausführung der beiden Bauteile in einfacher Weise erreicht werden kann. Die Untersetzung der Linearbewegung des Antriebselements 8 auf die Linearbewegung des Stellelements 3 erfolgt dabei im Verhältnis 2:1. Es handelt sich dabei um die bevorzugte Ausführungsform der Erfindung.

In Abwandlung dazu kann die Linearbewegung des Lagerstückes 18 auch über eine oder mehrere Umlenkungen auf das Stellelement 3 übertragen werden. Beispielsweise kann eine Zapfenführung vorgesehen sein, mit Hilfe derer die Bewegungsrichtung des Stellelements 3 in vergleich zu jener des Lagerstückes 18 umgelenkt wird, womit beliebige andere Übersetzungsverhältnisse erreicht werden können. Ähnlich dazu könnte die Umlenkung auch zwischen den Antriebselement 8 und dem Gegenstück 10 erfolgen. Auch ist eine Variante der Erfindung denkbar, in welcher das Abrollelement 9 zwei in Axialrichtung nebeneinander angeordnete Umfangsflächen aufweist, die allerdings im Gegensatz zu der gezeigten Ausführung unterschiedlichen Durchmesser aufweisen, wobei eine Umfangsfläche mit der ersten Abrollfläche 11 und die andere Umfangsfläche mit der zweiten Abrollfläche 16 in Eingriff steht. Auch hierdurch ist es möglich das Übersetzungsverhältnis der Verstellvorrichtung weitgehend frei zu gestalten. Allerdings ist damit ein komplexerer Aufbau der Verstelleinrichtung gegeben. Beispielhaft sollen die Übersetzungsverhältnisse 3:2, 4:3, 5:4 oder 5:3 genannt werden.

Wie eingangs erwähnt ist die Beabstandung des mit dem Scheinwerferreflektor 1 in Eingriff stehenden Stellelements 3 zu der im Scheinwerfer vorgesehenen Drehachse ah ausschlaggebend für die erzielbare Hebelwirkung, mit deren Hilfe eine Linearbewegung des Stellelements 3 in eine Drehbewegung des Scheinwerferreflektors 1 umgelenkt werden kann. Durch die erfindungsgemäße Verstelleinrichtung ist es nun möglich die Beabstandung zwischen Stellelement und einer Drehachse des Scheinwerfers (im gezeigten Beispiel ah) zu halbieren, ohne dabei die Stellgenauigkeit bzw. die Auflösung der Drehbewegung der Scheinwerferreflektors 1 negativ zu beeinflussen. Bei einem Übersetzungsverhältnis von 2:1 bleibt die Stellgenauigkeit bzw. Auflösung in diesem Fall unverändert, womit die erfindungsgemäße Verstelleinrichtung näher an die Drehachse heran gerückt werden kann und eine kompakte und Platz sparende Bauweise möglich wird.

Weiters können sämtliche Bauelemente der erfindungsgemäßen Verstelleinrichtung so dimensioniert werden, dass der Normalabstand zwischen Antriebselement 8 und der ersten Abrollfläche 11, sowie zwischen dem Abrollelement 9 und Stellelement 3 als auch der Durchmesser des Abrollelements 9 eine vorteilhafte Anordnung bzw. einen besonders Platz sparenden Einbau der Verstelleinrichtung zulassen. Unter Normalabstand wird dabei die Beabstandung zueinander normal zur Bewegungsrichtung des Antriebselements 8 verstanden.

Wenn eine kompakte Bauweise der Verstelleinrichtung nicht im Vordergrund steht, kann die erfindungsgemäße Verstelleinrichtung auch dazu verwendet werden, die Auflösung der Stellbewegung des Stellelements 3 zu verbessern. So kann die erfindungsgemäße Verstelleinrichtung alternativ auch dafür verwendet werden, die Auflösung der Stellbewegung des Stellelements 3 zu verdoppeln (wenn die Beabstandung zwischen der Drehachse ah und dem Stellelement 3 nicht halbiert wird), womit auch eine Verdopplung der durch das Stellelement 3 wirkenden Kraft und des daraus resultierenden Drehmoments erreicht wird. Auch ist eine Kombination aus Auflösungsverbesserung und Verkürzung der Beabstandung möglich.

## Patentansprüche

1. Verstelleinrichtung für einen Kraftfahrzeugscheinwerfer, welcher zumindest ein mit Hilfe eines Aktors bewegbares, optisch relevantes Bauteil (1) besitzt, wobei ein Antriebselement (8) des Aktors ein in einem Lagerstück (18) drehbar gelagertes Abrollelement (9) bewegt, wobei die Bewegung des Abrollelements in Bewegungsrichtung des Antriebselements (8) eine untersetzte Bewegung eines Stellelements (3) bewirkt, wobei das Antriebselement (8) des Aktors auf das Stellelement (3) wirkt, wobei das Stellelement (3) an dem optisch relevanten Bauteil (1) angreift, und das Antriebselement (8) durch den Aktor linear bewegbar ist sowie das Abrollelement (9) zumindest eine Umfangsfläche (13) aufweist, wobei der Aktor ein Elektromotor (7) ist, wobei das Abrollelement (9) in einem mit dem Stellelement (3) verbundenen Lagerstück (18) drehbar gelagert ist, und das Abrollelement (9) einerseits an einer ersten, dem Antriebselement 8 zugeordneten ersten Abrollfläche (11) und andererseits an einer zweiten, mit dem Elektromotor (7) ortsfest verbundenen Abrollfläche (16) in Eingriff steht und das Abrollelement (9) an seiner Umfangsfläche (13) zwischen der ersten Abrollfläche (11) und der mit dem Elektromotor (7) ortsfest verbundenen zweiten Abrollfläche (16) abrollen kann.

2. Verstelleinrichtung nach Anspruch 1, **dadurch gekennzeichnet, dass** die zumindest eine Umfangsfläche (13) mit einem Wellenstück (17) verbunden ist.

3. Verstelleinrichtung nach Anspruch 1 oder 2, **dadurch gekennzeichnet, dass** das Abrollelement (9) zwei Umfangsflächen (13) aufweist, die in Abstand voneinander liegend über ein Wellenstück (17) miteinander verbunden sind.

4. Verstelleinrichtung nach Anspruch 2 oder 3, **dadurch gekennzeichnet, dass** das Abrollelement (9) mit Hilfe des Wellenstücks (17) gelagert ist.

5. Verstelleinrichtung nach einem der Ansprüche 1 bis 4, **dadurch gekennzeichnet, dass** die zumindest eine Umfangsfläche (13) eine Verzahnung aufweist.

6. Verstelleinrichtung nach Anspruch 5, **dadurch gekennzeichnet, dass** die erste Abrollfläche (11) durch die Flächengestaltung einer Zahnstange gebildet ist.

7. Verstelleinrichtung nach Anspruch 5 oder 6, **dadurch gekennzeichnet, dass** die zweite Abrollfläche (16) durch die Flächengestaltung einer Zahnstange gebildet ist.

8. Verstelleinrichtung nach einem der Ansprüche 1 bis 7, **dadurch gekennzeichnet, dass** das Lagerstück (18) und das Stellelement (3) miteinander einstückig ausgeführt sind.

9. Verstelleinrichtung nach einem der Ansprüche 1 bis 8, **dadurch gekennzeichnet, dass** das Antriebselement (8) ein Gegenstück (10) aufweist, wobei die erste Abrollfläche (11) an dem Gegenstück (10) angeordnet ist, und das Gegenstück (10) in zumindest einer parallel zu der Bewegungsrichtung des Antriebselements (8) verlaufenden ersten Führung (12) geführt ist.

10. Verstelleinrichtung nach einem der Ansprüche 1 bis 9, **dadurch gekennzeichnet, dass** das Stellelement (3) in zumindest einer parallel zu der Bewegungsrichtung des Antriebselements (8) verlaufenden zweiten Führung (15) geführt ist.

11. Verstelleinrichtung nach einem der Ansprüche 1 bis 10, **dadurch gekennzeichnet, dass** der Elektromotor (7) ein elektrischer Linearmotor ist.

12. Kraftfahrzeugscheinwerfer mit zumindest einer Verstelleinrichtung nach einem der vorgehenden Ansprüche.

## Claims

1. An adjustment device for a motor vehicle headlight which has at least one optically relevant component (1) which is movable with the aid of an actuator, wherein a drive element (8) of the actuator moves a rolling element (9) which is mounted rotatably in a bearing piece (18), wherein the movement of the rolling element in the movement direction of the drive element (8) effects a reduced movement of an actuating element (3), wherein the drive element (8) of the actuator acts on the actuating element (3), wherein the actuating element (3) acts on the optically relevant component (1), and the drive element (8) is linearly movable by the actuator, and the rolling element (9) has at least one circumferential face (13), wherein the actuator is an electric motor (7), wherein the rolling element (9) is mounted rotatably in a bearing piece (18) which is connected to the actuating element (3), and the rolling element (9) is engaged both on a first rolling face (11) which is associated with the drive element (8) and on a second rolling face (16) which is connected in a stationary manner to the electric motor (7), and the rolling element (9) can roll on its circumferential face (13) between the first rolling face (11) and the second rolling face (16) which is connected in a stationary manner to the electric motor (7).

2. The adjustment device according to Claim 1, **characterised in that** the at least one circumferential face (13) is connected to a shaft piece (17).

3. The adjustment device according to Claim 1 or 2, **characterised in that** the rolling element (9) has two circumferential faces (13), which are connected to each other at a distance from each other via a shaft piece (17).

4. The adjustment device according to Claim 2 or 3, **characterised in that** the rolling element (9) is mounted with the aid of the shaft piece (17).

5. The adjustment device according to any one of Claims 1 to 4, **characterised in that** the at least one circumferential face (13) has teeth.

6. The adjustment device according to Claim 5, **characterised in that** the first rolling face (11) is formed by the surface design of a rack.

7. The adjustment device according to Claim 5 or 6, **characterised in that** the second rolling face (16) is formed by the surface design of a rack.

8. The adjustment device according to any one of Claims 1 to 7, **characterised in that** the bearing piece (18) and the actuating element (3) are formed integrally with each other.

9. The adjustment device according to any one of Claims 1 to 8, **characterised in that** the drive element (8) has a mating piece (10), wherein the first rolling face (11) is situated on the mating piece (10), and the mating piece (10) is guided in at least one first guide (12) running parallel to the movement direction of the drive element (8).

10. The adjustment device according to any one of Claims 1 to 9, **characterised in that** the actuating element (3) is guided in at least one second guide (15) running parallel to the movement direction of the drive element (8).

11. The adjustment device according to any one of Claims 1 to 10, **characterised in that** the electric motor (7) is an electric linear motor.

12. A motor vehicle headlight having at least one adjustment device according to any one of the preceding claims.

## Revendications

1. Dispositif de réglage pour un projecteur de véhicule automobile, lequel possède au moins un composant (1) important du point de vue optique, pouvant être déplacé au moyen d'un actionneur, un élément d'entraînement (8) de l'actionneur déplaçant un élément de roulement (9) supporté pouvant tourner dans une pièce de support (18), le déplacement de l'élément de roulement causant un déplacement démultiplié d'un élément de réglage (3) dans la direction de déplacement de l'élément d'entraînement (8), l'élément d'entraînement (8) de l'actionneur agissant sur l'élément de réglage (3), l'élément de réglage (3) venant en prise sur le composant important du point de vue optique (1) et l'élément d'entraînement (8) pouvant être déplacé de façon linéaire par l'actionneur, ainsi que l'élément de roulement (9) comportant au moins une surface périphérique (13), l'actionneur étant un moteur électrique (7), l'élément de roulement (9) étant supporté pouvant tourner dans une pièce de support (18) reliée à l'élément de réglage (3) et l'élément de roulement (9) étant en prise d'une part sur une première surface de roulement (11) attribuée à l'élément d'entraînement (8) et d'autre part sur une deuxième surface de roulement (16) fermement reliée au moteur électrique (7) et l'élément de roulement (9) pouvant rouler sur sa surface périphérique (13) entre la première surface de roulement (11) et la deuxième surface de roulement (16) fermement reliée au moteur électrique (7).

2. Dispositif de réglage selon la revendication 1, **caractérisé en ce qu'**au moins une surface périphérique (13) est reliée à une pièce en forme d'arbre (17).

3. Dispositif de réglage selon la revendication 1 ou 2, **caractérisé en ce que** l'élément de roulement (9) comporte deux surfaces périphériques (13), qui sont reliées l'une à l'autre à distance l'une de l'autre par une pièce en forme d'arbre (17).

4. Dispositif de réglage selon la revendication 2 ou 3, **caractérisé en ce que** l'élément de roulement (9) est supporté à l'aide de la pièce en forme d'arbre (17).

5. Dispositif de réglage selon l'une quelconque des revendications 1 à 4, **caractérisé en ce qu'**au moins une surface périphérique (13) comporte une denture.

6. Dispositif de réglage selon la revendication 5, **caractérisé en ce que** la première surface de roulement (11) est formée par la configuration superficielle d'une crémaillère.

7. Dispositif de réglage selon la revendication 5 ou 6, **caractérisé en ce que** la deuxième surface de roulement (16) est formée par la configuration superficielle d'une crémaillère.

8. Dispositif de réglage selon l'une quelconque des revendications 1 à 7, **caractérisé en ce que** la pièce de support (18) et l'élément de réglage (3) sont exécutés conjointement en une seule pièce.

9. Dispositif de réglage selon l'une quelconque des revendications 1 à 8, **caractérisé en ce que** l'élément d'entraînement (8) comporte une contre-pièce (10), la première surface de roulement (11) étant disposée sur la contre-pièce (10) et la contre-pièce (10) étant guidée dans au moins un premier guidage (12) passant parallèlement à la direction de déplacement de l'élément d'entraînement (8).

10. Dispositif de réglage selon l'une quelconque des revendications 1 à 9, **caractérisé en ce que** l'élément de réglage (3) est guidé dans au moins un deuxième guidage (15) passant parallèlement à la direction de déplacement de l'élément d'entraînement (8).

11. Dispositif de réglage selon l'une quelconque des revendications 1 à 10, **caractérisé en ce que** le moteur électrique (7) est un moteur linéaire électrique.

12. Projecteur de véhicule automobile avec au moins un dispositif de réglage selon l'une quelconque des revendications précédentes.
